# EUROPEAN PATENT SPECIFICATION

(11) **EP 0 301 619 B1**
(45) Date of publication and mention of the grant of the patent: **16.03.1994**
(21) Application number: 88201397.2
(22) Date of filing: 04.07.1988
(51) Int. Cl.: A01G 31/02

(54) **Culture system and a holder intended for use in said system**
Kultursystem und Behälter zur Verwendung in diesem System
Système de culture et conteneur à utiliser dans ledit système

(30) Priority: 22.07.1987 NL 8701732; 21.10.1987 NL 8702519
(43) Date of publication of application: 01.02.1989
(73) Proprietor: Rockwool Lapinus B.V., NL-6074 NH Melick-Herkenbosch (NL)
(72) Inventor: Welleman, Jacobus Cornelis Christiaan, NL-5491 HG St. Oederode (NL); Van Banning, Robert Julius Herman Maria, NL-6151 JH Munstergeleen (NL)
(74) Representative: Prins, Hendrik Willem

(56) References cited:
- AT-B- 338 031
- DE-C- 319 387
- NL-A- 8 105 726
- NL-A- 8 401 638
- NL-A- 8 403 752
- US-A- 2 803 091
- US-A- 4 058 931

## Description

The present invention relates to a culture system in which a mat is used as culture medium. The mat, of mineral wool for instance, functions as support for the plant and as water store and provides in addition a matrix in which rooting takes place. The mat is placed in a reservoir in which is held a layer of water. The reservoir can consist of a layer of water impermeable material encasing the mat entirely or partially, or of a substantially form retaining trough or tray.

NL-A-81.057126 discloses a container provided with lateral studs and a central raised bottom portion on which a substrate mat rests. Using a substrate of mineral wool, the water level in the container resides within the substrate mat. Accordingly, there is no air space between the grow mat and the water layer within the holder.

NL-A-84.03752 discloses a carrier plate comprising a zig-zag formed sheet provided with openings and V-formed blocks residing within the sheet. On this carrier plate rest grow blocks. In order to avoid plant root outgrowth via the openings in the carrier plate either the openings are of a size impermeable to plant roots or a root-impermeable layer is interposed between the carrier plate and the grow blocks rest thereon.

NL-A-84.01638 discloses a hydroculture system comprising a trough-like holder having an upper slot in which grow blocks are clamp fitted while the side surfaces and a part of the bottom surface is covered by holder walls. The grow blocks are at such a distance of a water layer within the holder that there is no capillary contact between the grow blocks and the water layer.

The plant roots take up air as well as water. It is assumed that the plants can provide themselves with sufficient water from the culture system via the roots present in the water layer and with sufficient oxygen via the roots present in the culture medium. This insight offers the possibility of enlarging the volume of available water of the culture system without this entailing an enlarging of the volume of mineral wool or the moisture content thereof.

This is obtained with a culture system according to the invention which comprises:
a water impermeable reservoir having therein a layer of water;
means for maintaining said layer of water in said reservoir; and
a water absorbing mat, which mat extends above said layer of water creating air space between the mat and the layer of water and rests on at least one mat support coming out above said layer of water, whereby the mat is in capillary contact with the layer of water, and whereby said mat and said mat support are manufactured from a culture medium, such that plant roots on the one hand may grow out into the layer of water and on the other hand may grow out into mat extending above the layer of water so providing the plant roots with sufficient air,
or with a culture system with plants according to the invention which comprises:
a water impermeable reservoir having therein a layer of water; and
means for maintaining said layer of water in said reservoir;
a water absorbing mat which mat extends above said layer of water and rests on at least one holder, creating air space between the mat and the layer of water, whereby said mat and said mat support are manufactured from a mineral wool culture medium, such that some plant roots are in the layer of water, and the other plant roots are in the mat extending above the layer of water so providing the plant roots with sufficient air.

According to a first embodiment of the culture system, whereby the mat extends into the layer of water, the mat is in capillary communication with this water. In accordance with a second embodiment, whereby the mat does not extend into the layer of water, the support or supports provide the capillary communication with the mat, and the plant roots can in this way grow out of the mat and the supports into the layer of water and water is drawn up out of the layer of water into the mat in reversed direction. This also achieves the additional advantage that the total moisture, and especially the moisture in the upper layer of the mat, diminishes and the oxygen content increases. According to a third embodiment water and nutrients are supplied via a dripper to the mat extending above the layer of water, but the roots grow out of the mat into the water layer.

In both embodiments any undesired excessive quantity of water in the culture system does not result in disastrous consequences (only in a temporarily greater wetness in the mat) and a greater water store is moreover created which markedly improves the safety of the culture system.

For reasons of production technique it is desirable that the mat preferably forms with the mat support(s) a monoblock.

According to a favourable embodiment side walls of the mat support extending above the layer of water diverge away from each other in a direction away from the water layer, whereby preferably two side walls of a mat support each enclose an acute angle with the water surface of the water layer. In this way is achieved that the portion of the mat located freely above the water layer can only be provided with water by water transport from the sides. Since moreover the interface with the water layer is comparatively small, transport through this borderline layer is also restricted, resulting, likewise in a desirable sense, in the mat becoming relatively drier.

The mat with mat supports formed as monoblock obtains sufficient stability of its own if in preference the side walls stand off from a bottom surface.

Diverse types of mat support are possible, for instance pillars that are moulded on can be used. For reasons of production technique it is however to be recommended that in accordance with a first preferred embodiment the mat support extends in length direction of the mat or, as according to a second embodiment, a number of mat supports distributed along the length of the mat extend in width direction thereof.

Particularly favourable is when the side walls of the mat support or mat supports preferably lie in a common plane with the side walls of the mat connecting thereto.

Cutting losses are avoided as far as possible when in addition the monoblock is preferably cut out of a blanket of culture medium and a cutting plane forms a plane of symmetry with an adjoining monoblock. A further desired enlarging of the water store in the reservoir can be obtained if in preference the mat support or mat supports rest(s) on at least one raised member extending at least over a part of the height of the water layer.

Use of a trough could be dispensed with if the reservoir is formed by a strip of flexible, water impermeable material and is shaped with modelling means into a trough form. It is advantageous in this respect that the raised member is separated from the layer of water by the strip of flexible, water impermeable material. The raised member is thus located outside the reservoir and need not be subjected to a sterilization treatment prior to culture, or material can be used that in principle can either not be sterilized or only partially so. These matters are also applicable if a trough if used.

According to another preferred embodiment it is favourable that the monoblock rests in at least one holder.

In various preferred embodiments the monoblock has in section the form of an equilateral triangle or isosceles right-angled triangle with the apex angle facing downward, or alternatively a trapezium or right-angled trapezium with the shorter parallel side facing downward.

The invention also relates to the above described monoblock itself that is intended for use in the culture system according to the invention.

Finally, the invention relates to a trough-like holder for a grow-mat which can be applied in the previously described culture system. According to a first embodiment the trough-like holder is characterized by at least one raised member standing up from the base, on which member can rest the grow-mat to be accommodated in the holder.

According to a second embodiment of the trough-like holder intended for a grow-mat provided with mutually diverging grow-mat side walls, this holder comprises upright holder side walls onto which connect support surfaces which diverge from each other such that the grow-mat can rest with its diverging side walls on the support surfaces, the upper face of the grow-mat thereby lying substantially in a horizontal plane. A good support with a relatively form retaining and torsion stiff trough-like holder is obtained if preferably the holder side walls stand upward from a holder base and if the support surfaces extend from the respective holder side walls in bent upward direction with their free edge directed away from the holder base.

Mentioned and other features will be elucidated on the basis of a number of embodiments of the culture system and the monoblock according to the invention, which embodiments will be discussed with reference to the annexed drawings.

In the drawing:
Fig. 1 shows a perspective view of a section of a first culture system according to the invention;
fig. 1a and 1b each show a variant of the culture system from fig. 1, whereby the monoblock rests in at least a holder;
fig. 2 and 3 each show other embodiments of the culture system according to the invention;
fig. 4 is a portion from a blanket of mineral wool with cutting lines along which the blanket is cut into monoblocks according to the invention;
fig. 5, 6 and 7 each show variants of the monoblocks according to the invention;
fig. 8 is a section on another scale of yet another culture system according to the invention;
fig. 9 is a monoblock according to the invention which forms a variant of the culture system from fig. 8;
fig. 10 and 11 are sections corresponding with fig. 2 and 3 of other variants of the trough-like holder for the grow-mat;
fig. 12 shows schematically the forming of the trough from fig. 11 from a strip of plastic material; and
fig. 13 shows in partly broken away, perspective view an apparatus with which the trough from fig. 11 can be manufactured.

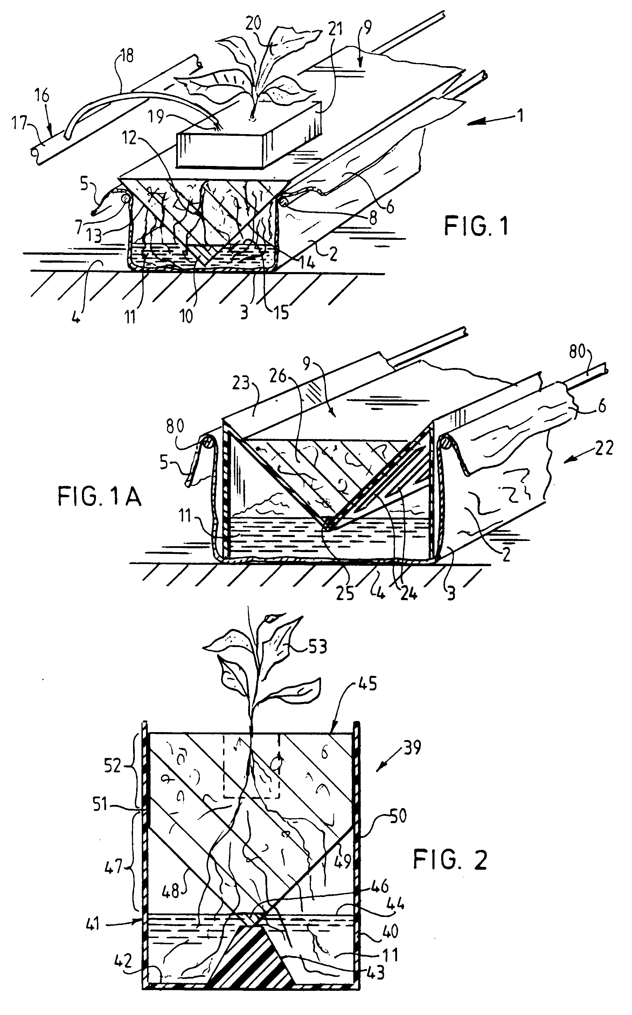

Figure 1 shows the culture system 1 according to the invention. The culture system comprises a reservoir 2 formed by a strip of water impermeable plastic 3 which lies partially on a groundwork 4. Side edges 5 and 6 are folded over fixed bars 7 and 8 disposed parallel to each other at a fixed height above the groundwork. Resting on these bars 7 and 8 with interpositioning of edges 5 and 6 is the monoblock 9 which is triangular in section.

Monoblock 9 comprises a bottom support 10 which extends into a layer of water 11 present in reservoir 2. The upper, remaining portion 12 of monoblock 9 extends above the layer of water 11. The portion 12 which is the equivalent of the original grow-mat is in capillary contact with the layer of water 11 only via the part 10.

Both the long side walls 13 and 14 diverge from each other relative to the water surface 15 and each enclose an acute angle (45°) therewith.

Means 16 for maintaining the water layer 11 comprise a central water line 17 from which water 19 is supplied using a dripper 18 to the plant 20 which is placed with the grow block 21 on monoblock 9.

In this way plant roots root into the monoblock 9 and a part of the roots continues further into the layer of water 11. Compared to known systems, the water capacity relative to the volume of rock wool in this case is thus enlarged by ca. 50%. The increase in the water capacity offers greater safety against disturbances in the water supply, while in addition, as a result of the triangular monoblock form, a temporary excess dose of water does not have disastrous consequences.

Figure 1a shows a variant. This culture system 22 comprises an "M"-shaped holder 23 that is provided with slots 24. The height of the water layer 11 is such that the part 25 of monoblock 9 reaches into the water, resulting in capillary provision with water of the portion 26 of the monoblock located above the part 25. The edges 5 and 6 of the strip 3 are in this case folded over iron wire 80, the only purpose of this wire being to provide a reservoir 2 in which a sufficiently high water level can be maintained.

In the variant as in fig. 1b the culture system 22′ comprises a number of "M"-shaped holders 23 in which rests the monoblock 9 with interpositioning of the strip 3 of water impermeable material. Only the part 25 of monoblock 9 reaches into the layer of water 11. The strip 3 bellies out between successive holders 23 onto the groundwork 4, there forming an additionally available volume of water. Holders 23 do not belong in this variant to those parts of the culture system which have to be sterilized.

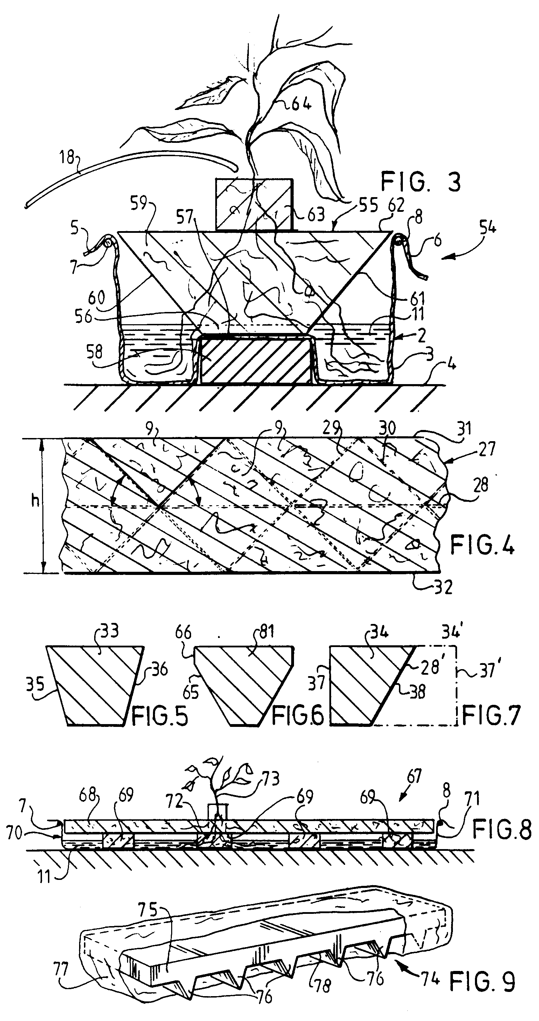

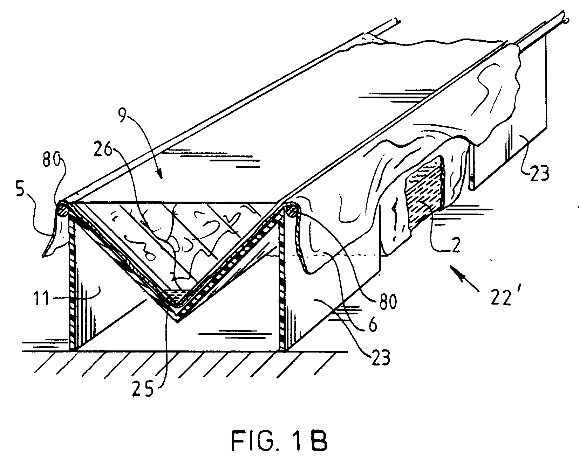

Figure 4 shows a preferred manner in which the monoblocks 9 from figure 1 and 1a are cut from a blanket 27 of mineral wool. The blanket has a height h of 15 cm and is successively halved in height by cutting along the cutting plane 28, following which the triangular monoblocks 9 are formed by cuts along the cutting planes 29 and 30 which each enclose an angle of 45° with the upper surface 31 or lower surface 32. In this manner monoblocks can be provided which do not result in cutting losses.

The monoblock 33 from figure 5, a trapezium, and the monoblock 34 from figure 7, a right-angled trapezium, can likewise each be manufactured from a mineral blanket 27 without significant cutting losses, since the cutting planes, which are also side walls 35, 36 and 37, 38 respectively, form a plane of symmetry with the adjoining monoblock to be cut out of the blanket.

Figure 2 shows a culture system 39 whereby the reservoir 40 is formed by a trough 41 open towards the top, the base 42 of which is provided with a raised member 43 extending below the water level 44. The bottom support part 46 of monoblock 45 is situated below water level 44 and draws up water for the whole monoblock 45. The portion 47 of monoblock 45 adjoining part 46 has side walls 48 and 49 which extend over the water layer 11 as far as the trough walls 50 and 51. Joining onto portion 47 is another portion 52. As a result of this raised portion 52 an additional further decrease/increase of the water content/oxygen content at the top of monoblock 45 is realized. There is nevertheless sufficient water available for the plant 53 because it reaches with its roots through monoblock 45 into the layer of water 11. The culture system 39 has the advantage of a further enlarged water volume as a consequence of the use of the raised member 43.

The height of the water layer 11 is realized using means that are not shown, for example in this case a feed line with one or more overflows. A temporary raising of the water layer as a result of any type of disturbance does not lead to disastrous consequences because the moisture content is on average lower in the monoblock 45 and certainly at the top.

As in the culture system 54 from fig. 3 to be discussed later, a strip 3 may if required be laid over the inner surface of trough 41, this to include the bottom 42 and raised member 43. There is thus no contact between the grow-mat with plants and the water reservoir 40 on the one hand and trough 41 on the other, so that the latter need not undergo a sterilization treatment.

Figure 3 shows another culture system 54 according to the invention. Compared to system 1 from figure 1 use is made in this case of a monoblock 55 that has a trapezoid section. Monoblock 55 comprises a support part 56 which rests with a support surface 57 on a raised member 58 in the form of a beam, a row of bricks or the like, which is placed on the groundwork 4 and over which the strip 3 is laid. The mat portion 59 has side faces 60 and 61 which diverge from the bottom surface 57 and from the water layer 11 in upward direction and join at the point of the bars 7 and 8 the upper face 62 on which lies the grow block 63 with the plant 64.

The culture system 54 combines the advantages of the simple culture system from figure 1 and the enlarged water volume of the culture system 39 from figure 2.

Figure 6 shows a monoblock 81 of which the side walls 65 and 66 do not lie in one plane.

The total height of for instance the monoblocks 33, 81 and 34 in the figures 5-7 respectively is for example 7.5 cm, the width for the bottom surface is 2-5 cm and the width for the upper surface is for example 10-15 cm. The length amounts at choice to 1 - 2 metres.

Figure 8 shows a culture system 67 according to the invention in which a grow-mat 68 rests on a number of bearing blocks 69 arranged beneath the length of the mat and each manufactured from mineral wool. The bearing blocks are placed in a layer of water 11 of the reservoir 70 formed by a strip 71 of flexible material folded over the iron bars 7 and 8. Grow-mat 68 is in capillary contact for liquid communication with the layer 11 via the supports 69.

Because the roots 72 of plant 73 grow through grow-mat 68 and supports 69, grow-mat 68 and its separate supports 69 acquire a good mutual connection. Grow-mat 68 has for example a height of 2.5 cm and supports 69 a height of 7.5 cm. Despite the smaller rock wool volume of grow-mat 68 optimum culture is nevertheless possible because the roots can reach the water layer 11 via supports 69 and sufficient water is available for plant 73. Thus are achieved the primary advantages of the culture system according to the invention. Plants 73 are preferably placed above supports 69. If the grow-mat 68 is thicker or the weight of the plants permits, it is also possible to place a plant on the mat 68 between two supports. The ratio of available water volume to rock wool volume increases by ca. 25-30%. Assuming an incline percentage of 1.5% for the groundwork 4 it is possible for the grow-mats 68 to have a length of 2 metres. It is therefore possible to increase the water buffer without grow-mat 68 becoming too wet.

Figure 9 shows another monoblock 74 according to the invention that consists of a mat portion 75 and a number of mat supports 76 arranged beneath the mat and distributed over its length and extending beneath mat 75 in width direction. This monoblock 74 is enclosed by a watertight cover 77. In the case of use in any of the above described culture systems, it is a requirement that the water level is always located below the bottom surface 78 of mat 75.

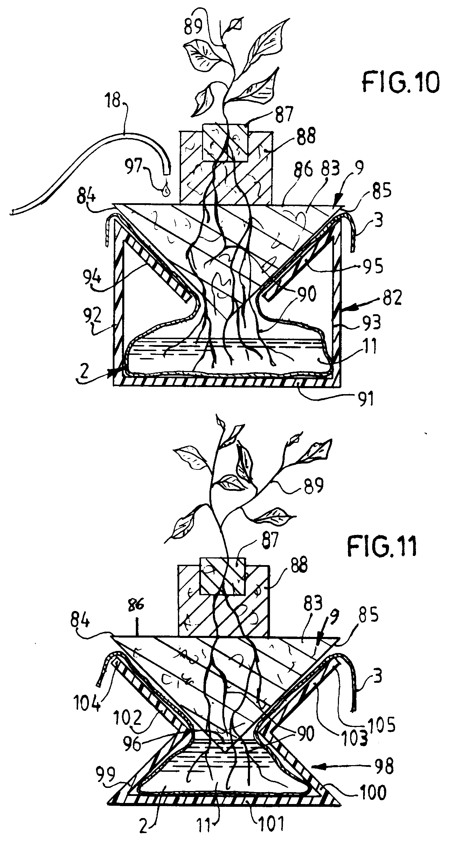

Figure 10 shows a trough-like holder 82 for a grow-mat 83 formed as a monoblock 9. Grow-mat 83 is provided with mutually diverging grow-mat side walls 84 and 85 which join an upper surface 86. Placed on upper surface 86 is a grow block 88 provided with a germinating plug 87, the plant 89 having grown out of this block with its roots 90 through grow-mat 83 into the water layer 11.

Holder 82 consists of holder side walls 92 and 93 standing from a holder base 91, onto which walls connect the respective support surfaces 94 and 95 which diverge from each other relative to holder bottom 91 such that grow-mat 83 rests with its diverging side walls 84 and 85 on these support surfaces 94 and 95, the upper surface 86 of grow-mat 83 thereby lying substantially in a horizontal plane.

The side walls 84, 85 are supported by the support surfaces 94 and 95 with the interpositioning of a strip of water impermeable plastic 3. Strip 3 thus forms the reservoir 2 in holder 82.

The apex part 86 of grow-mat 83 extends above the layer of water 11 and makes no direct contact with it. Water and any required nutrients 97 are therefore drip-fed to grow-mat 83 via the dripper 18.

It will be apparent that the strip of water impermeable plastic 3 can be omitted, but the holder 82 must in that case be made sterile prior to cultivation.

In order to counter evaporation from grow-mat 83 the latter can in addition be completely enclosed by a water impermeable strip of material.

In the case of holder 98 the holder side walls 99 and 100 enclose an acute angle with the holder base 101. The mutually diverging support surfaces 102 and 103 joining onto the respective holder side walls 99 and 100 extend in a bent upward direction whereby their free edges 104 and 105 respectively face away from holder base 101. This in contrast to holder 82 from figure 10, whereby support surfaces 94 and 95 extend in a bent downward direction and their free ends face towards the holder base 91.

Also in this case the grow-mat side walls 84 and 85 support on support surfaces 102 and 103 of holder 98 with the interpositioning of the strip of water impermeable material 3. In addition part 96 of grow-mat 83 extends into the layer of water 11, so that a separate dripper may be dispensed with. The strip 3 can of course be omitted.

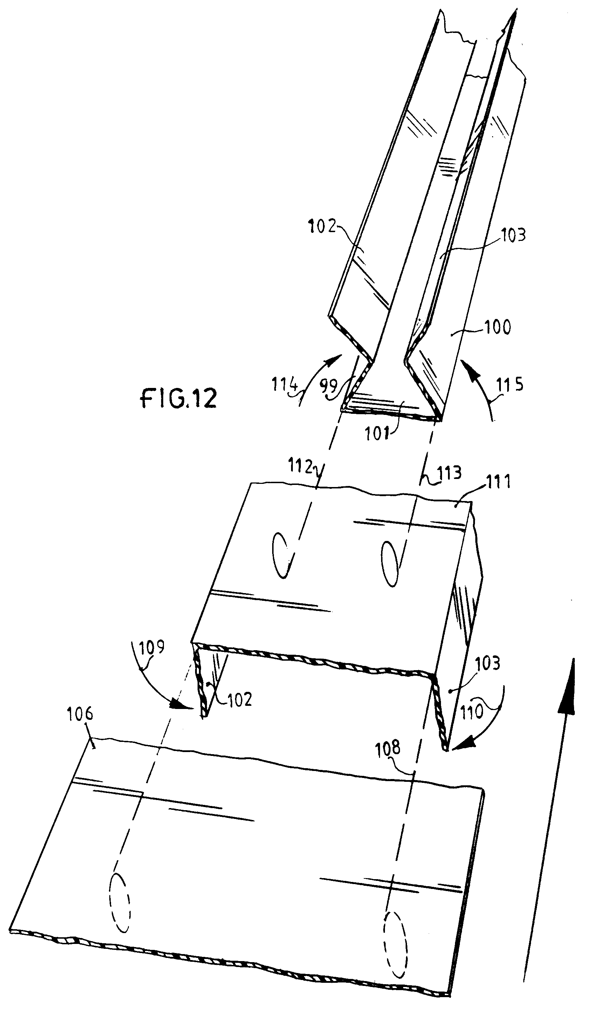

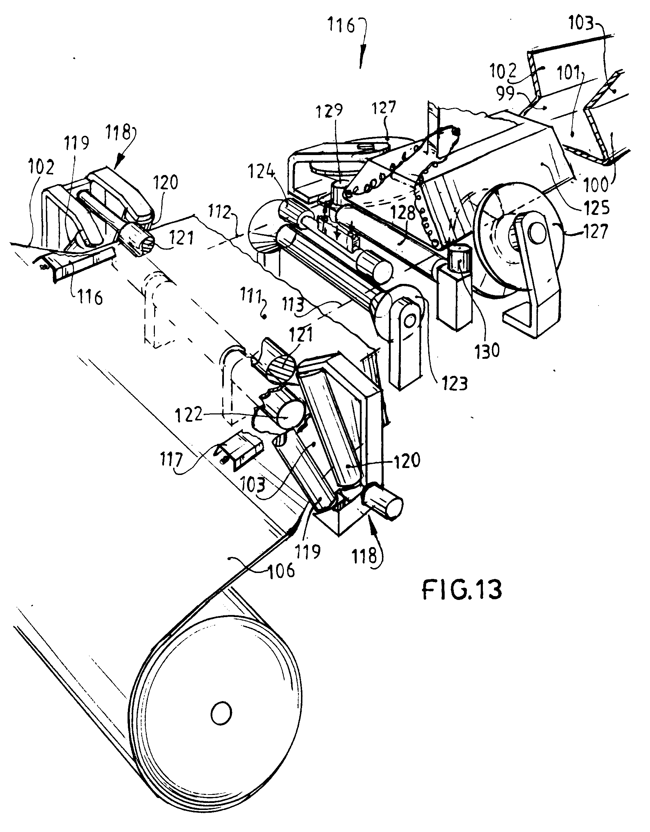

Figures 12 and 13 show the simple manner in which holder 98 from figure 11 can be manufactured from a strip of material 106, for instance a thermosetting plastic. By first heating strip 106 locally along lines 107 and 108 the support surfaces 102 and 103 are formed by bending in the direction of the arrows 109 and 110 respectively. By then locally heating the central portion 111 along lines 112 and 113 and by bending over as according to arrows 114 and 115 the holder base 101 and both holder side walls 99 and 100 are formed.

Finally, figure 13 shows a portable apparatus 116 with which the form processing shown in figure 12 can be performed. The strip 106 is guided through beneath two heating elements 116 and 117 in order to obtain the local softening along the respective lines 107 and 108. The later support surfaces 102 and 103 are formed with rolls 119 and 120 accommodated in claws 118, while the central portion 111 is fixed in a pair of rolls 121 and 122.

Using a double cone roller 123 and a co-operating heated roll 124 the forming movement is initiated according to arrows 114 and 115. This forming movement is completed with the passage along a heated core 125 and co-operating rotating forming rolls 126 and 127. During the form processing the trough is supported during the process of being formed by a bottom roll 128 and two lateral rolls 129 and 130.

Although the culture system and the monoblocks in the description are specified as being manufactured from mineral wool, it will be apparent that any culture medium that can be suitably formed and made wet with water can be used, such as:
1. mineral wool, such as rock wool, glass wool and the like; and
2. plastics, particularly foamed plastics such as polyphenol foams, polyurethane foams.

## Claims

1. Culture system (1,22,22',39,54,67,98), comprising:
a water impermeable reservoir (2) having therein a layer of water (11);
means (16) for maintaining said layer of water (11) in said reservoir (2); and
a water absorbing mat (9), which mat extends above said layer of water (11) creating air space between the mat (9) and the layer of water (11) and rests on at least one mat support coming out above said layer of water, whereby the mat (9) is in capillary contact with the layer of water (11), and whereby said mat and said mat support are manufactured from a culture medium, such that plant roots on the one hand may grow out into the layer of water (11) and on the other hand may grow out into the mat (9) extending above the layer of water (11) so providing the plant roots with sufficient air.

2. Culture system with plants, comprising:
a water impermeable reservoir (2) having therein a layer of water (11); and
means for maintaining said layer of water (11) in said reservoir (2);
a water absorbing mat (9) which mat (9) extends above said layer of water (11) and rests on at least one holder (82), creating air space between the mat (9) and the layer of water (11), whereby said mat and said mat support are manufactured from a mineral wool culture medium, such that some plant roots are in the layer of water (11), and the other plant roots are in the mat (9) extending above the layer of water (11) so providing the plant roots with sufficient air.

3. Culture system (1,22,22',39,54,98) as claimed in claim 1 or 2, **characterized in that** the mat (12,26,75) forms with the mat support(s) (10,25,46,56,76,96) a monoblock (9,45,47,55,59,74).

4. Culture system (1,22,22',39,54,98) as claimed in claim 1-3, **characterized in that** side walls (13,14;48,49;60,61;84,85) of the mat support(s) (10,25,46,56,76,96) which reach out above the water diverge from each other in a direction away from the layer of water (11).

5. Culture system (1,22,22',39,54,98) as claimed in claim 4, **characterized in that** two side walls (13,14;48,49;60,61;84,85) of a mat support (10,25,46,56,76,96) each enclose an acute angle with the water surface of the layer of water (11).

6. Culture system (54) as claimed in claim 3 or 4, **characterized in that** the side walls (60,61) stand off from a bottom surface (57) facing or residing in the layer of water (11).

7. Culture system (1,22,22',39,54,98) as claimed in claims 1-6, **characterized in that** the mat support (10,25,46,56,76,96) extends in length direction of the mat (12,26).

8. Culture system (67) as claimed in claims 1-6, **characterized in that** a number of mat supports (69,76) distributed along the length of the mat (68,74) extend in width direction of said mat (68).

9. Culture system (1,22,22',39,54,98) as claimed in claims 1-8, **characterized in that** the side walls (13,14;48,49;60,61;84,85) of the mat support (10,25,46,56,76,96) or mat supports lie in a common plane with the side walls of the mat (9) connecting thereto.

10. Culture system (1,22,22',39,54,98) as claimed in claim 9, **characterized in that** the monoblock (9) is cut out of a blanket (27) of culture medium and a cutting plane (28,29,30) forms a plane of symmetry with an adjoining monoblock (9).

11. Culture system (39,54) as claimed in claims 1-10, **characterized in that** the mat support (46,56) or mat supports rest(s) on at least one raised member (43,58) extending at least over a part of the height of the water layer (11).

12. Culture system (1,22,22',54) as claimed in claims 1-11, **characterized in that** the reservoir (2) is formed by a strip of flexible, water impermeable material and is shaped with modelling means (7,8,80) into a trough form.

13. Culture system (54) as claimed in claims 11 or 12, **characterized in that** the raised member (58) is separated from the layer of water (11) by the strip of flexible, water impermeable material (3).

14. Culture system (22,22',39,98) as claimed in claims 1,3-13, **characterized in that** the monoblock (9) rests in the holder (11,23,82,98).

15. Culture system (1,22,22',39,54,67,98) as claimed in claims 1-14, **characterized in that** the monoblock has in section the form of an equilateral triangle or isosceles right-angled triangle with the apex angle facing downward, or alternatively a trapezium or right-angled trapezium with the shorter parallel side facing downward.

16. Trough-like holder (98) for a grow-mat (9) provided with mutually diverging grow-mat side walls (84,85) which join onto an upper surface, said holder (98) comprising holder side walls (99,100) onto which connect support surfaces (102,103) which diverge from each other such that said grow-mat (9) can rest with its diverging side walls (84,85) on said support surfaces (102,103) and that said upper face (86) of said grow-mat thereby lies substantially in a horizontal plane **characterized in that** the holder side walls (99,100) stand upward from a holder bottom (101) and that the support surfaces (102,103) extend from the respective holder side walls (99,100) in bent upward direction with their free edge facing away from said holder bottom (101).

17. Trough-like holder (98) as claimed in claim 16, **characterized in that** the side surfaces (99,100) each enclose an acute angle with the holder bottom (101).

## Patentansprüche

1. Kultursystem (1,22,22',39,54,67,98) mit:
einem wasserundurchlässigen Behälter (2), der darin eine Wasserschicht (11) aufweist;
Mitteln (16) zum Halten der Wasserschicht (11) in dem Behälter (2); und
einer wasserabsorbierenden Matte (9), die über der Wasserschicht (11) verläuft und einen Luftraum zwischen sich (9) und der Wasserschicht (11) ausbildet und auf mindestens einer Mattenstütze lagert, die sich aus der Wasserschicht heraus erstreckt, wobei die Matte (9) in kapillarischen Kontakt mit der Wasserschicht (11) steht und die Matte und die Mattenstütze aus einem Kulturmedium hergestellt werden, so daß Pflanzenwurzeln einerseits heraus und in die Wasserschicht (11) hinein, und andererseits heraus und in die Matte (9) hinein wachsen können, die sich über der Wasserschicht (11) erstreckt, so daß die Pflanzenwurzeln mit ausreichend Luft versehen werden.

2. Kultursystem mit Pflanzen, umfassend:
einen wasserundurchlässigen Behälter (2), der darin eine Wasserschicht (11) aufweist; und
Mittel zum Halten der Wasserschicht (11) in dem Behälter (2);
einer wasserabsorbierenden Matte (9), die über der Wasserschicht (11) verläuft und auf mindestens einer Halteeinrichtung (32) gelagert ist und einen Luftraum zwischen sich (9) und der Wasserschicht (11) ausbildet, wobei die Matte und die Mattenstütze aus einem Mineralwolle-Kulturmedium hergestellt werden, so daß sich einige Pflanzenwurzeln in der Wassrschicht (11) befinden und die anderen Pflanzenwurzeln in der Matte (9) sind, die sich über der Wasserschicht (11) erstreckt, so daß für die Pflanzenwurzeln ausreichend Luft vorgesehen wird.

3. Kultursystem (1,22,22',39,54,98) nach Anspruch 1 oder 2, dadurch gekennzeichnet, daß die Matte (12,26,75) mit der (den) Mattenstütze(n) (10,25,46,56,76,96) eine einstückige Einheit (9,45,47,55,59,74) bildet.

4. Kultursystem (1,22,22',39,54,98) nach Anspruch 1-3, dadurch gekennzeichnet, daß Seitenwände (13,14;48,49; 60,61;84,85) der Mattenstütze(n) (10,25,46,56,76,96), die aus und über dem Wasser herausragt(en), auseinanderlaufen, in eine Richtung weg von der Wasserschicht (11).

5. Kultursystem (1,22,22',39,54,98) nach Anspruch 4, dadurch gekennzeichnet, daß jede von zwei Seitenwänden (13,14;48,49;60,61;84,85) einer Mattenstütze (10,25,46,56,76,96) einen spitzen Winkel mit der Wasseroberfläche der Wasserschicht (11) einschließt.

6. Kultursystem (54) nach Anspruch 3 oder 4, dadurch gekennzeichnet, daß die Seitenwände (60,61) frei auf einer Bodenfläche (57) stehen, die der Wasserschicht (11) zugewandt ist oder sich darin aufhält.

7. Kultursystem (1,22,22',39,54,98) nach Anspruch 1-6, dadurch gekennzeichnet, daß sich die Mattenstütze (10,25,46,56,76,96) in Längsrichtung der Matte (12,26) erstreckt.

8. Kultursystem (67) nach Anspruch 1-6, dadurch gekennzeichnet, daß mehrere entlang der Länge der Matte (68,74) verteilte Mattenstützen (69,76) in Richtung der Breite der Matte (68) verlaufen.

9. Kultursystem (1,22,22',39,54,98) nach Anspruch 1-8, dadurch gekennzeichnet, daß die Seitenwände (13,14;48,49;60,61;84,85) der Mattenstütze (10,25,46,56,76,96) oder Mattenstützen in einer gemeinsamen Ebene mit den Seitenwänden der Matte (9) liegen, die damit verbunden ist.

10. Kultursystem (1,22,22',39,54,98) nach Anspruch 9, dadurch gekennzeichnet, daß die Einheit (9) aus einer Kulturmediumdecke (27) geschnitten wird und eine Schneideebene (28,29,30) eine Symmetrieebene mit einer benachbarten Einheit (9) bildet.

11. Kultursystem (39,54) nach Anspruch 1-10, dadurch gekennzeichnet, daß die Mattenstütze (46,56) oder Mattenstützen auf mindestens einem erhobenen Element (43,58) lagert (lagern), das sich zumindest teilweise über die Höhe der Wasserschicht (11) erstreckt.

12. Kultursystem (1, 22, 22',54) nach Anspruch 1-11, dadurch gekennzeichnet, daß der Behälter (2) aus einem flexiblen, wasserundurchlässigen Materialstreifen gebildet und mit Modellierungsmitteln (7,8,80) in eine Rinnenform geformt wird.

13. Kultursystem (54) nach den Ansprüchen 11 oder 12, dadurch gekennzeichnet, daß das erhobene Element (58) von der Wasserschicht (11) getrennt wird, durch den Streifen aus flexiblem, wasserundurchlässigen Material (3).

14. Kultursystem (22, 22',39,98) nach einem der Ansprüche 1, 3-13, dadurch gekennzeichnet, daß die einstückige Einheit (9) auf der Halteeinrichtung (11, 23, 82, 98) lagert.

15. Kultursystem (1,22,22',39,54,67,98) nach einem der Ansprüche 1-14, dadurch gekennzeichnet, daß die einstückige Einheit im Querschnitt die Form eines gleichseitigen Dreiecks oder eines gleichschenkligen, rechtwinkligen Dreiecks mit dem Scheitelwinkel nach unten gerichtet aufweist, oder alternativ eines Trapez oder eines rechtwinkligen Trapezes mit der kürzeren parallelen Seite nach unten gerichtet aufweist.

16. Rinnenartige Halteeinrichtung (98) für eine Wachstumsmatte (9), die mit gegenseitig auseinanderlaufenden Seitenwänden (84,85) versehen ist, welche sich auf einer oberen Fläche verbinden, wobei die Halteeinrichtung (98) umfaßt: Halteeinrichtung-Seitenwände (99, 100), auf denen Stützflächen (102, 103) verbunden werden, welche auseinanderlaufen, so daß die Wachstumsmatte (9) mit ihren divergierenden Seitenwänden (84,85) auf den Stützflächen (102, 103) lagern kann und daß die obere Fläche (86) der Wachstumsmatte dabei im wesentlichen in einer horizontalen Ebene liegt, dadurch gekennzeichnet, daß die Halteeinrichtung-Seitenwände (99, 100) von einem Halteeinrichtungsboden (101) aufrecht stehen und daß die Stützflächen (102, 103) sich von den jeweiligen Halteeinrichtung-Seitenwänden (99,100) mit ihrem freien Rand in einer nach oben gebogenen Richtung erstrecken, der von dem Halteeinrichtungsboden (101) weggerichtet ist.

17. Rinnenartige Halteeinrichtung (98) nach Anspruch 16, dadurch gekennzeichnet, daß jede der Seitenflächen (99,100) einen spitzen Winkel mit dem Halteeinrichtungsboden (101) einschließt.

## Revendications

1. Système de culture (1, 22, 22', 39, 54, 67, 98) comprenant :
un réservoir (2) imperméable à l'eau ayant à l'intérieur une couche d'eau (11),
des moyens (16) destinés à maintenir ladite couche d'eau (11) dans ledit réservoir (2) et
un matelas pouvant absorber l'eau (9), matelas qui s'étend par dessus ladite couche d'eau (11), créant un espace d'air entre le matelas (9) et la couche d'eau (11) et est posé sur au moins un support de matelas dépassant le niveau de ladite couche d'eau, où le matelas (9) est en contact capillaire avec la couche d'eau (11), et où ledit matelas et ledit support de matelas sont fabriqués à partir d'un moyen de culture, de sorte que, d'une part, les racines des plantes puissent pousser dans la couche d'eau (11) et, d'autre part, puissent pousser dans le matelas (9) s'étendant au-dessus de la couche d'eau (11), les plantes ayant ainsi suffisamment d'air.

2. Système de culture pour des plantes, comprenant :
un réservoir imperméable à l'eau (2) ayant à l'intérieur une couche d'eau (11) et
des moyens destinés à maintenir ladite couche d'eau (11) dans ledit réservoir (2),
un matelas pouvant absorber l'eau (9), matelas qui s'étend au-dessus de ladite couche d'eau (11) et est posé sur au moins un conteneur (82), créant un espace d'air entre le matelas (9) et la couche d'eau (11), où ledit matelas et ledit support de matelas sont fabriqués à partir d'un moyen de culture en laine minérale, de sorte que certaines racines de plantes sont dans la couche d'eau (11), et les autres racines de plantes sont dans le matelas (9) s'étendant au-dessus de la couche d'eau (11), les plantes ayant, ainsi, suffisamment d'air.

3. Système de culture (1, 22, 22', 39, 54, 98) selon la revendication 1 ou 2, caractérisé en ce que le matelas (12, 26, 75) forme un monobloc (9, 45, 47, 55, 59, 74) avec le ou les supports de matelas (10, 25, 46, 56, 76, 96).

4. Système de culture (1, 22, 22', 39, 54, 98) selon les revendications 1 à 3, caractérisé en ce que les parois latérales (13, 14 ; 48, 49 ; 60, 61 ; 84, 85) du ou des supports de matelas (10, 25, 46, 56, 76, 96), qui dépassent de l'eau, s'écartent l'une de l'autre dans le sens opposé à la couche d'eau (11).

5. Système de culture (1, 22, 22', 39, 54, 98) selon la revendication 4, caractérisé en ce que deux parois latérales (13, 14 ; 48, 49 ; 60, 61 ; 84, 85) d'un support de matelas (10, 25, 46, 56, 76, 96) forment, chacune, un angle vif avec la surface de l'eau de la couche d'eau (11).

6. Système de culture (54) selon la revendication 3 ou 4, caractérisé en ce que les parois latérales (60, 61) dépassent d'une surface inférieure (57) faisant face à ou étant logée dans la couche d'eau (11).

7. Système de culture (1, 22, 22', 39, 54, 98) selon les revendications 1 à 6, caractérisé en ce que le support de matelas (10, 25, 46, 56, 76, 96) s'étend dans le sens de la longueur du matelas (12, 26).

8. Système de culture (67) selon les revendications 1 à 6, caractérisé en ce qu'un certain nombre de supports de matelas (69, 76), placés le long de la longueur du matelas (68, 74), s'étendent dans le sens de la largeur dudit matelas (68).

9. Système de culture (1, 22, 22', 39, 54, 98) selon les revendications 1à 8, caractérisé en ce que les parois latérales (13, 14 ; 48, 49 ; 60, 61 ; 84, 85) du support de matelas (10, 25, 46, 56, 76, 96) ou des supports de matelas sont dans le même plan que les parois latérales du matelas (9) qui y sont reliées.

10. Système de culture (1, 22, 22', 39, 54, 98) selon la revendication 9, caractérisé en ce que le monobloc (9) est découpé dans une couverture (27) de moyen de culture et qu'un plan de coupe (28, 29, 30) forme un plan de symétrie avec un monobloc voisin (9).

11. Système de culture (39, 54) selon les revendications 1 à 10, caractérisé en ce que le support de matelas (46, 56) ou les supports de matelas sont posés sur au moins un élément surélevé (43, 58) s'étendant au moins par-dessus une partie de la hauteur de la couche d'eau (11).

12. Système de culture (1, 22, 22', 54) selon les revendications 1 à 11, caractérisé en ce que le réservoir (2) est formé par une bande de matière flexible, imperméable à l'eau, à laquelle des moyens de mise en forme (7, 8, 80) donnent la forme d'une auge.

13. Système de culture (54) selon la revendication 11 ou 12, caractérisé en ce que l'élément surélevé (58) est séparé de la couche d'eau (11) par une bande (3) de matière flexible imperméable à l'eau.

14. Système de culture (22, 22', 39, 98) selon les revendications 1, 3 à 13, caractérisé en ce que le monobloc (9) est posé dans le conteneur (11, 23, 82, 98).

15. Système de culture (1, 22, 22', 39, 54, 67, 98) selon les revendications 1 à 14, caractérisé en ce que le monobloc a, en coupe, la forme d'un triangle équilatéral ou d'un triangle isocèle à angle droit dont l'angle supérieur est tourné vers le bas, ou, alternativement, d'un trapèze ou d'un trapèze à angle droit, dont le côté parallèle le plus court est tourné vers le bas.

16. Conteneur en forme d'auge (98) pour un matelas de culture (9) muni de parois latérales (84, 85) de matelas de culture s'écartant l'une de l'autre qui rejoignent une surface supérieure, ledit conteneur (98) comprenant des parois latérales de conteneur (99, 100) sur lesquelles se connectent des surfaces de support (102, 103) qui s'écartent l'une de l'autre de manière à ce que les parois latérales divergeantes (84, 85) dudit matelas de culture (9) puissent être posées sur lesdites surfaces de support (102, 103) et à ce que ladite face supérieure (86) dudit matelas de culture soit, de ce fait, essentiellement dans un plan horizontal, caractérisé en ce que les parois latérales du conteneur (99, 100) sont posées sur le fond du conteneur (101) et en ce que les surfaces de support (102, 103) s'étendent, depuis les parois latérales respectives (99, 100), dans une direction inclinée vers le haut, leurs arêtes libres étant opposées au fond dudit conteneur (101).

17. Conteneur en forme d'auge (98) selon la revendication 16, caractérisé en ce que les surfaces latérales (99, 100) forment, chacune, un angle vif avec le fond du conteneur (101).
